(19) Europäisches Patentamt
European Patent Office
Office européen des brevets

(11) Veröffentlichungsnummer: **0 152 862**
**B1**

(12) # EUROPÄISCHE PATENTSCHRIFT

(45) Veröffentlichungstag der Patentschrift: **22.06.88**

(51) Int. Cl.⁴: **C 08 G 18/80**, C 08 L 75/04, C 09 J 5/06, C 08 L 75/12

(21) Anmeldenummer: **85101227.8**

(22) Anmeldetag: **06.02.85**

(54) **Lagerstabile, bei erhöhter Temperatur selbstvernetzende oder mit organischen Polyisocyanaten vernetzbare Oligourethane und ein Verfahren zu ihrer Herstellung, sowie ihre Verwendung als Bindemittel bzw. Bindemittelkomponente.**

(30) Priorität: **18.02.84 DE 3405937**

(43) Veröffentlichungstag der Anmeldung: **28.08.85 Patentblatt 85/35**

(45) Bekanntmachung des Hinweises auf die Patenterteilung: **22.06.88 Patentblatt 88/25**

(84) Benannte Vertragsstaaten: **BE DE FR GB IT NL SE**

(56) Entgegenhaltungen:
**EP-A-0 046 088**
**DE-A-2 806 217**
**DE-B-1 811 657**
**US-A-3 835 191**
**US-A-4 277 319**

(73) Patentinhaber: **BAYER AG, Konzernverwaltung RP Patentabteilung, D-5090 Leverkusen 1 Bayerwerk (DE)**

(72) Erfinder: **Noll, Klaus, Dr., Morgengraben 6, D-5000 Köln 80 (DE)**
Erfinder: **Pedain, Josef, Dr., Haferkamp 6, D-5000 Köln 80 (DE)**
Erfinder: **Potter, Terry, Dr., 83 East Benjamin Drive, New Martinsville, W.Va. 26155 (US)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 152 862 B1

**Beschreibung**

Die vorliegende Erfindung betrifft neue, bei Raumtemperatur lagerstabile, bei erhöhten Temperaturen selbstvernetzende ode mit organischen Polyisocyanaten mit gegebenenfalls blockierten Isocyanatgruppen vernetzbare Oligourethane mit über Urethangruppen eingebauten, reversibel blockierten Aminogruppen, ein Verfahren zur Herstellung dieser Oligourethane durch Umsetzung von organischen Polyisocyanaten mit gegebenenfalls teilweise blockierten Isocyanatgruppen mit reversibel blockierte Aminogruppen aufweisenden ein- oder mehrwertigen Alkoholen sowie ihre Verwendung als Bindemittel bzw. Bindemittelkomponente.

Reversibel blockierte Aminogruppen aufweisende Reaktionspartner für organische Polyisocyanate mit gegebenenfalls blockierten Isocyanatgruppen sind bereits bekannt. So beschreibt beispielsweise die DE-AS 1 520 139 hitzevernetzbare, zu Polyharnstoffen aushärtende Zweikomponentensysteme, in denen eine Komponente freie Isocyanatgruppen und die andere Komponente reversibel blockierte Aminogruppen in Form von Aldimin- bzw. Ketimingruppen enthält. Die DE-AS 1 694 237 beschreibt hitzevernetzbare Kombinationen aus NCO-Prepolymeren mit Phenol-blockierten Isocyanatgruppen und Ket- und/oder Enamingruppen aufweisenden aliphatischen oder aromatischen Verbindungen.

Es wurde nun überraschenderweise gefunden, dass auch bestimmte, nachstehend näher beschriebene, durch Michael-Addition von sekundären Aminen an bestimmte Acrylsäurederivate entstandene tert. Amine verkappte sekundäre Amine darstellen, die bei Raumtemperatur mit Polyisocyanaten mit blockierten und/oder freien Isocyanatgruppen abgemischt werden können und bei mässig erhöhten Temperaturen von ca. 90–130°C mit diesen unter Harnstoffbildung abreagieren, wozu die Anwesenheit von Luftfeuchtigkeit nicht erforderlich ist. Im übrigen ist es sehr leicht möglich, in die neuen, blockierten sekundären Amine freie und/oder blockierte Isocyanatgruppen einzubauen, so dass lagerstabile, durch Erhitzen auf mässig erhöhte Temperaturen wie ca. 90–130°C selbstvernetzende Systeme erhalten werden.

Gegenstand der Erfindung sind somit bei Raumtemperatur lagerstabile, bei erhöhter Temperatur selbstvernetzende oder mit organischen Polyisocyanaten mit gegebenenfalls zumindest teilweise blockierten Isocyanatgruppen vernetzbare Oligourethane, gekennzeichnet durch

a) einen Gehalt an tertiären Aminstickstoffatomen (Atomgewicht = 14) in Form von über Urethangruppen endständig und/oder innerhalb des Moleküls eingebauten Struktureinheiten der Formel

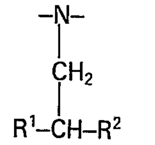

von 0,1 bis 3 Gew.-%, wobei

$R^1$ für Wasserstoff oder einen Alkylrest mit 1 bis 4 Kohlenstoffatomen steht,

$R^2$ für $-C{\equiv}N$, $-CO-NH_2$, $-CO-NHR^3$, $-CO-NR^3_2$ oder $-COOR^3$ steht, wobei

$R^3$ einen, gegebenenfalls inerten Substituenten aufweisenden, einwertigen Kohlenwasserstoffrest bedeutet,

b) einen Gehalt an Isocyanatgruppen (Molekulargewicht = 42) von 0 bis 15 Gew.-%, und

c) einen Gehalt an blockierten Isocyanatgruppen (berechnet als NCO, Molekulargewicht = 42) von 0 bis 15 Gew.-%.

Gegenstand der Erfindung ist auch ein Verfahren zur Herstellung der neuen Oligourethane, dadurch gekennzeichnet, dass man ein, gegebenenfalls Urethangruppen aufweisendes organisches Polyisocyanat, dessen Isocyanatgruppen gegebenenfalls teilweise in blockierter Form vorliegen, mit Verbindungen der Formel

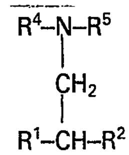

in welcher

$R^1$ und $R^2$ die obengenannte Bedeutung haben und

$R^4$ und $R^5$ für gleiche oder verschiedene Reste stehen

und Kohlenwasserstoffreste mit 1–20 Kohlenstoffatomen oder, mindestens eine alkoholische Hydroxylgruppe als Substituenten aufweisende Kohlenwasserstoffreste mit 2 bis 20 Kohlenstoffatomen bedeuten, mit der Massgabe, dass mindestens einer der Reste $R^4$ oder $R^5$ mindestens eine alkoholische Hydroxylgruppe aufweist,

unter Einhaltung eines Äquivalentverhältnisses von freien Isocyanatgruppen zu Hydroxylgruppen von 0,7:1 bis 2,5:1 unter Urethanbildung zur Reaktion bringt, wobei im übrigen die Art und Mengenverhältnisse der genannten Ausgangsmaterialien so gewählt werden, dass die resultierenden Oligourethane

a) einen Gehalt an tert. Aminstickstoffatomen in Form von Struktureinheiten der obengenannten Formel von 0,1 bis 3 Gew.-%,

b) einen Gehalt an freien Isocyanatgruppen von 0 bis 15 Gew.-% und

c) einen Gehalt an blockierten Isocyanatgruppen (berechnet als NCO) von 0 bis 15 Gew.-% aufweisen.

Gegenstand der Erfindung ist auch die Verwendung der Oligourethane gegebenenfalls in Abmischung mit organischen Polyisocyanaten mit gegebenenfalls blockierten Isocyanatgruppen, als Bindemittel für hitzevernetzbare Beschichtungsmittel.

Die beim erfindungsgemässen Verfahren einzusetzenden Verbindungen der Formel

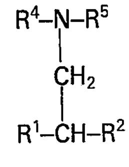

stellen Michael-Addukte von sekundären Aminen der Formel

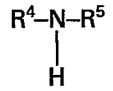

an Verbindungen der Formel

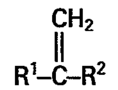

die formal als Derivate der Acrylsäure bzw. von substituierten Acrylsäuren angesehen werden können, dar.

Bei den sekundären Aminen der vorstehend genannten allgemeinen Formel handelt es sich um solche, für welche $R^4$ und $R^5$ die bereits obengenannte Bedeutung haben, vorzugsweise jedoch um solche, für welche $R^4$ und $R^5$ für gleiche oder verschiedene Reste stehen und Alkylgruppen mit 1 bis 18 Kohlenstoffatomen, vorzugsweise 1 bis 4 Kohlenstoffatomen oder Hydroxyalkylreste mit 2 bis 4 Kohlenstoffatomen mit gegebenenfalls mehreren Hydroxylsubstituenten stehen, mit der Massgabe, dass mindestens einer der Reste $R^4$ oder $R^5$ einen Hydroxyalkylrest darstellt. Beispiele geeigneter sekundärer Amine, die dieser Definition entsprechen, sind Methyl-2-hydroxy-ethylamin, Methyl-2-hydroxypropylamin, Methyl-3-hydroxypropylamin, Ethyl-, Butyl-, Octyl- und Stearyl-ω-hydroxyalkylamine, Bis-(2-hydroxyethyl)-amin, Bis-[2-hydroxypropyl]amin, Bis[3-hydroxypropyl]amin oder 2-(Methyl-, Ethyl-, Butyl-, Oleyl- oder Stearyl-amino)-2-methylpropandiol-1, 3.

Geeignete ungesättigte Verbindungen der zuletztgenannten Formel sind beliebige Verbindungen, für welche $R^1$ und $R^2$ die obengenannte Bedeutung haben, vorzugsweise jedoch solche der genannten allgemeinen Formel, für welche $R^1$ für Wasserstoff oder eine Methylgruppe steht, und $R^2$ die bereits obengenannte Bedeutung hat, mit der Massgabe, dass $R^3$ für einen Alkylrest mit 1 bis 4 Kohlenstoffatomen steht. Besonders bevorzugt sind solche Verbindungen der zuletztgenannten allgemeinen Formel, für welche $R^1$ für Wasserstoff oder eine Methylgruppe und $R^2$ für eine Nitrilgruppe oder eine gegebenenfalls substituierte Säureamidgruppe stehen.

Zu den besonders bevorzugten Derivaten der Acrylsäure bzw. von substituierten Acrylsäuren gehören somit Acrylnitril, Methacrylnitril, Acrylsäureamid, Methacrylsäureamid, N-Methyl-acrylsäureamid, N-Methacryl-säureamid, N-Butylacrylsäureamid, N,N-Dimethyl-acryl-säureamid oder N,N-Dimethyl-methacrylsäureamid. Die Ester der genannten Säuren wie z.B. Acrylsäuremethylester, -ethylester, -butylester oder -stearylester, sowie die entsprechenden Alkacrylsäureester sind zwar ebenfalls geeignet, jedoch weniger bevorzugt, da ihre Umsetzung mit den sekundären Aminen zu den entsprechenden erfindungsgemässen Ausgangsmaterialien weniger glatt verläuft als im Falle der genannten bevorzugten Ausgangsmaterialien. So müssten vergleichsweise höhere Temperaturen, stark alkalische Katalysatoren und überschüssige Mengen der ungesättigten Verbindungen eingesetzt werden, welche anschliessend durch Destillation wieder entfernt werden müssen.

Die Herstellung der erfindungswesentlichen Ausgangsverbindungen der Formel

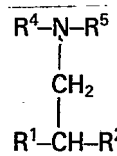

aus den genannten Grundsubstanzen erfolgt nach an sich bekannter Weise (vgl. z.B. Chem. Pharm. Bull. [Tokyo] 9, [1961], Seiten 996-999 oder DE-OS 2519008). In der Regel genügt es, die beiden Reaktionspartner bei Raumtemperatur in stöchiometrischen Mengen miteinander zu vermischen und die auftretende exotherme Reaktion gegebenenfalls durch Kühlung unter Kontrolle zu halten.

Die so erhaltenen erfindungswesentlichen Ausgangsmaterialien der zuletztgenannten allgemeinen Formel entsprechen bezüglich der Bedeutung der Reste $R^1$, $R^2$, $R^4$ und $R^5$ den oben gemachten Ausführungen.

Reaktionspartner für die Hydroxylgruppen aufweisenden tert. Amine der zuletztgenannten allgemeinen Formel sind beliebige organische Polyisocyanate mit gegebenenfalls teilweise blockierten Isocyanatgruppen.

Geeignet sind beispielsweise aliphatische, cycloaliphatische, araliphatische, aromatische und heterocyclische Polyisocyanate, wie sie z.B. von W. Siefken in Justus Liebigs Annalen der Chemie, 562, Seiten 75 bis 136, beschrieben werden, beispielsweise solche der Formel

$$Q(NCO)_n$$

in der

$n = 2-4$, vorzugsweise 2,

und

Q einen aliphatischen Kohlenwasserstoffrest mit 2 – 18, vorzugsweise 6 – 10 C-Atomen,
einen cycloaliphatischen Kohlenwasserstoffrest mit 4 – 15, vorzugsweise 5 – 10 C-Atomen,
einen aromatischen Kohlenwasserstoffrest mit 6 – 15, vorzugsweise 6 – 13 C-Atomen,
oder einen araliphatischen Kohlenwasserstoffrest mit 8 – 15, vorzugsweise 8 – 13 C-Atomen,
bedeuten, z.B. Ethylen-diisocyanat, 1,4-Tetramethylen-diisocyanat, 1,6-Hexamethylendiisocyanat, 1,12-Dodecan-diisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5-isocyanatomethyl-cyclohexan (Isophorondiisocyanat), Perhydro-2,4'- und/oder -4,4'-diphenyl-methan-diisocyanat, 2,4- und 2,6-Toluylendiisocyanat sowie beliebige Gemische dieser Isomeren, Diphenylmethan-2,4'-und/oder -4,4'-diisocyanat, Naphthylen-1,5-diisocyanat.

Ferner kommen beispielsweise erfindungsgemäss in Frage:
Triphenylmethan-4,4', 4''-triisocyanat, Polyphenylpolymethylen-polyisocyanate, wie sie durch Anilin-Formaldehyd-Kondensation und anschliessende Phosgenierung erhalten und z. B. in den GB-Patentschriften 874430 und 848671 beschrieben werden, Carbodiimidgruppen aufweisende Polyisocyanate, wie sie in der DE-Patent 994890, der BE-Patentschrift 761626 und der NL-Patentanmeldung 7102524 beschrieben werden, Isocyanuratgruppenaufweisende Polyisocyanate, wie sie z. B. in der US-Patentschrift 3001973, in den DE-Patentschriften 1022789, 1222067 und 1027394 sowie in den DE-Offenlegungsschriften 1929034 und 2004048 beschrieben werden oder Biuretgruppen aufweisende Polyisocyanate, wie sie z. B. in den US-Patentschriften 3124605, 3201372 und 3124605 sowie in der GB-Patentschrift 889050 beschrieben werden. Es ist auch möglich, beliebige Mischungen der vorgenannten Polyisocyanate zu verwenden.

Besonders bevorzugt werden jedoch als organische Polyisocyanate prepolymere Polyisocyanate eingesetzt, wie sie in an sich bekannter Weise durch Umsetzung von einfachen Polyisocyanaten mit unterschüssigen Mengen an Verbindungen mit gegenüber Isocyanatgruppen reaktionsfähigen Gruppen, vorzugsweise Hydroxylgruppen, erhalten werden. Zur Herstellung dieser NCO-Prepolymeren werden vorzugsweise die technisch leicht zugänglichen Polyisocyanate, insbesondere Diisocyanate der Polyurethanchemie eingesetzt. Beispiele hierfür sind 2,4- und 2,6-Toluylendiisocyanat, sowie deren technischen Gemische, Diphenylmethan-2,4'- und -4,4'-Diisocyanat, sowie deren technischen Gemische, Isophorondiisocyanat oder Perhydro-4,4'-diphenylmethandiisocyanat.

Reaktionspartner für diese Diisocyanate bei der Herstellung der NCO-Prepolymeren sind beliebige organische Verbindungen, welche mindestens zwei gegenüber Isocyanatgruppen reaktionsfähige Wasserstoffatome aufweisen, und die ansonsten im Sinne der Isocyanat-Additionsreaktion inert sind. Vorzugsweise werden die entsprechenden Polyhydroxylverbindungen, insbesondere solche, die 2 bis 8, vorzugsweise 2 bis 3 alkoholische Hydroxylgruppen aufweisen, eingesetzt. Diese Verbindungen weisen ein Molekulargewicht von 62 bis 10000, vorzugsweise 500 bis 6000 auf.

Geeignete Polyhydroxylverbindungen sind beispielsweise

a) einfache, gegebenenfalls Ethergruppen aufweisende, mehrwertige Alkohole des Molekulargewichtsbereichs 62 bis 400 wie z. B. Ethylenglykol, Propylenglykol, 1,2- und 1,4-Dihydroxybutan, 1,6-Dihydroxyhexan, Diethylenglykol, Triethylenglykol, Dipropylenglykol, Tripropylenglykol, Tetrapropylenglykol, Trimethylolpropan oder Glycerin;

b) höhermolekulare Polyesterpolyole des Molekulargewichtsbereichs 400 bis 10000, vorzugsweise 500 bis 6000 auf Basis der genannten einfachen Alkohole und mehrwertigen Carbonsäuren bzw. Anhydriden derartiger Säuren wie z. B. Adipinsäure, Phthalsäure, Tetrahydrophthalsäure, Hexahydrophthalsäure oder den entsprechenden Säureanhydriden;

c) höhermolekulare Polyetherpolyole des Molekulargewichtsbereichs 400 bis 10000, vorzugsweise 500 bis 6000 wie z. B. die Alkoxylierungsprodukte der unter a) genannten einfachen mehrwertigen Alkohole oder von Bisphenolen wie z. B. Bisphenol A, die unter Verwendung von Ethylenoxid und/oder Propylenoxid als Alkoxylierungsmittel hergestellt werden, und bei deren Herstellung gegebenenfalls auch Gemische verschiedener Startermoleküle eingesetzt werden können.

Bei der Herstellung der NCO-Prepolymeren können selbstverständlich beliebige Gemische der unter a) bis c) beispielhaft genannten Verbindungen verwendet werden. Neben diesen beispielhaft genanntenVerbindungen können auch die aus der Polyurethanchemie an sich bekannten Polythioether, Polyacetale, Polycarbonate oder Polyesteramide zur Herstellung der NCO-Prepolymeren verwendet werden.

Bei der Herstellung der NCO-Prepolymeren werden die genannten Ausgangsmaterialien im allgemeinen unter Einhaltung eines Äquivalentverhältnisses von Isocyanatgruppen zu gegenüber Isocyanatgruppen reaktionsfähigen Gruppen von 1,2:1 bis 5:1 vorzugsweise 1,5:1 bis 3:1 bei Temperaturen von 20 bis 150°C, vorzugsweise 60 bis 120°C miteinander zur Reaktion gebracht. Aus den genannten Angaben bezüglich des Äquivalentverhältnisses der Reaktionspartner geht bereits hervor, dass unter «NCO-Prepolymeren» im Rahmen der vorliegenden Erfindung auch sogenannte «Semiprepolymere», d. h. Gemische echter Prepolymerer mit überschüssigen Mengen an Ausgangsisocyanaten, zu verstehen sind.

Bei der Durchführung des erfindungsgemässen Verfahrens kann die Polyisocyanatkomponente als solche, d. h. in nichtblockierter oder in teilblockierter Form zum Einsatz gelangen. Geeignete Blockierungsmittel sind beispielsweise Lactame, wie ε-Caprolactam, Oxime wie Acetonoxim, Methylethylketoxim (Butanonoxim) und Cyclohexanonoxim, C-H-acide Verbindungen wie Malonsäurediethylester, Acetessigsäureethylester und Acetylaceton, Alkohole wie die einfachen Monoalkohole mit 1 bis 4 C-Atomen, 2-Ethylhexanol, Ethylenglykolmonoethylether und Diethylenglykolmonoethylether, Phenole wie Phenol, Kresol und Xylenol und heterocyclische Verbindungen, wie Triazole, Imidazoline, Imidazole und Tetrahydropyrimidine. Die beschriebenen Blockierungsmittel können allein oder in Form von Gemischen eingesetzt werden. Bevorzugte Blockierungsmittel sind ε-Caprolactam, Butanonoxim und Malonsäurediethylester.

Die beim erfindungsgemässen Verfahren zum Einsatz gelangende Polyisocyanatkomponente weist im allgemeinen einen Gesamtgehalt an freien und blockierten Isocyanatgruppen (berechnet als NCO, Molekulargewicht = 42, bezogen auf das Gesamtgewicht der Polyisocyanatkomponente inklusive dem Blockierungsmittel) von 1 bis 25, vorzugsweise 2 bis 15 Gew.-% und einen Gehalt an freien Isocyanatgruppen, bezogen auf das Gesamtgewicht der Polyisocyanate, inklusive dem gegebenenfalls vorliegenden Blockierungsmittel, von 1 bis 20, vorzugsweise 1 bis 12 Gew.-% auf. Die NCO-Funktionalität der gegebenenfalls teilweise blockierten Polyisocyanate, d. h. die Anzahl an freien Isocyanatgruppen, die im statistischen Mittel pro Molekül im gegebenenfalls teilblockierten Polyisocyanat vorliegen, liegt im allgemeinen bei 0,3 bis 3. Im Falle der Verwendung von erfindungswesentlichen tert.-Aminen, die zwei oder mehr Hydroxylgruppen aufweisen, liegt die NCO-Funktionalität vorzugsweise unter 2, beispielsweise bei 0,5 bis 1,8, um den Aufbau von hochmolekularen Polyurethan zu erschweren. Im Falle der bevorzugten Verwendung von NCO-Prepolymeren kann diese NCO-Funktionalität sowohl durch Art (Funktionalität) der Ausgangspolyisocyanate und Polyhydroxylverbindungen als auch durch deren Mengenverhältnisse und auch durch geeignete Wahl der Menge des Blockierungsmittels eingestellt werden. Im Falle der Verwendung von teilblockierten Polyisocyanaten liegen in diesen im allgemeinen pro freier Isocyanatgruppe 0,2 bis 3 blockierte Isocyanatgruppen vor.

Die Blockierungsreaktion kann im übrigen in an sich bekannter Weise in An- oder Abwesenheit von Lösungsmitteln wie z. B. Aceton, Methylethylketon, Essigsäureethylester, Essigsäurebutylester, Toluol, Xylol und/oder aliphatischen Kohlenwasserstofflösungsmitteln bei Temperaturen bis zu 150°C, vorzugsweise bei 60 – 120°C erfolgen.

Das erfindungsgemässe Verfahren, d. h. die Umsetzung der gegebenenfalls teilblockierten Polyisocyanate mit den Hydroxylgruppen aufweisenden tert. Aminen der Formel

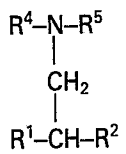

kann sowohl in Substanz als auch in Gegenwart geeigneter Lösungsmittel wie z. B. solchen der zuletzt beispielhaft genannten Art bei 20 bis 120, vorzugsweise 60 bis 100°C erfolgen, wobei Temperaturen oberhalb 90°C nur kurzzeitig in Betracht kommen können (Verhinderung einer vorzeitigen Vernetzung). Die Mengenverhältnisse der Reaktionspartner entsprechen hierbei im allgemeinen einem NCO/OH-Äquivalentverhältnis von 0,7:1 bis 2,5:1, vorzugsweise 0,9:1 bis 1,5:1 und insbesondere 1:1 bis 1,2:1, bezogen auf die freien Isocyanatgruppen der Polyisocyanatkomponente und die Hydroxylgruppen der erfindungswesentlichen tert. Amine. Ein unter 1:1 liegendes Äquivalentverhältnis kommt hierbei im allgemeinen nur in Betracht, wenn erfindungswesentliche tert. Amine eingesetzt werden, die mindestens zwei Hydroxylgruppen aufweisen. Ein oberhalb 1,2:1 und insbesondere oberhalb 1,5:1 liegendes Äquivalentverhältnis kommt dann in Betracht, wenn erfindungsgemässe Oligourethane erhalten werden sollen, die noch freie Isocyanatgruppen aufweisen.

Gemäss einer besonders bevorzugten Ausführungsform des erfindungsgemässen Verfahrens werden Art und Mengenverhältnisse der Reaktionspartner so gewählt, dass Umsetzungsprodukte erhalten werden, in denen für jede tert. Aminogruppe 1 bis 1,5, vorzugsweise 1 bis 1,2 freie und blockierte Isocyanatgruppen vorliegen. Besonders wertvolle erfindungsgemässe Oligourethane werden dann erhalten, wenn die Art und Mengenverhältnisse der Reaktionspartner so gewählt werden, dass in den Oligourethanen keine freien Isocyanatgruppen mehr vorliegen und für jedes tert. Aminstickstoffatom 1 bis 1,2 blockierte Isocyanatgruppen zur Verfügung stehen. Sowohl die letztgenannten besonders bevorzugten erfindungsgemässen Oligourethane als auch die obengenannten noch freie Isocyanatgruppen (neben blockierten Isocyanatgruppen) aufweisenden Umsetzungsprodukte stellen bei Raumtemperatur lagerstabile, unter Hitzeeinwirkung selbstvernetzende Kunststoffvorläufer dar.

Gemäss einer weiteren jedoch weniger beforzugten Ausführungsform des erfindungsgemässenm Verfahrens werden Polyisocyanate mit ausschliesslich freien Isocyanatgruppen eingesetzt und mit den Hydroxylgruppen aufweisenden tert. Aminen unter Einhaltung eines NCO/OH-Äquivalentverhältnisses von 1:1 bis 1,2:1, vorzugsweise 1:1 bis 1,05:1 zur Reaktion gebracht. Auf diese Weise entstehen erfindungsgemässe Oligourethane, deren Gehalt an Isocyanatgruppen praktisch Null ist (der geringfügige Isocyanatüberschuss reagiert zumeist durch Nebenreaktionen ab). Die so erhaltenen erfindungsgemässen Oligourethane sind selbstverständlich nicht selbstvernetzend, sie können jedoch mit organischen Polyisocyanaten, vorzugsweise solchen mit blockierten Isocyanatgruppen zu lagerstabilen Gemischen abgemischt werden, die ihrerseits bei erhöhten Temperaturen vernetzt werden können.

Gemäss einer dritten ebenfalls weniger bevorzugten Ausführungsform der Herstellung der erfindungsgemässen Oligourethane werden die gegebenenfalls teilblockierten Ausgangspolyisocyanate mit den Hydroxylgruppen aufweisenden tert. Aminen unter Einhaltung eines Äquivalentverhältnisses von freien Isocyanatgruppen zu Hydroxylgruppen von 1,1:1 bis 5:1, vorzugsweise 1,2:1 bis 3:1 zur Reaktion gebracht, so dass Oligourethane entstehen, die noch erhebliche Mengen an freien Isocyanatgruppen aufweisen, und die durch Umsetzung dieser freien Isocyanatgruppen mit Kettenverlängerungsmitteln zu höhermolekularen erfindungsgemässen Oligourethanen kettenverlängert werden können. Geeignete Kettenverlängerungsmittel sind hierbei beispielsweie die oben unter a) genannten einfachen mehrwertigen Alkohole oder Diamine des Molekulargewichtsbereichs 60 – 400 wie z. B. Ethylendiamin, Hexamethylendiamin, Isophorondiamin, 4,4'-Diamino-dicyclohexylmethan, 2,4- und/oder 2,6-Diaminotoluol oder 4,4'-Diaminodiphenylmethan. Auch Hydrazin bzw. Hydrazinderivate wie z. B. Hydrazinhydrat, Oxalsäuredihydrazid oder Adipinsäuredihydrazid kämen als denkbare Kettenverlängerungsmittel in Betracht. Auch gemäss dieser Ausführungsform können in die Umsetzungsprodukte durch geeignete Auswahl der Art und Mengenverhältnisse der Reaktionspartner blockierte Isocyanatgruppen mit eingebaut werden, so dass, den obigen Ausführungen entsprechend, selbstvernetzende Endprodukte entstehen. Selbstverständlich kann jedoch auch, den obigen Ausführungen entsprechend, auf den Einbau von blokkierten Isocyanatgruppen verzichtet werden, so dass, auch gemäss dieser Ausführungsform nichtselbstvernetzende jedoch mit Polysisocyanaten, vorzugsweise blockierten Polyisocyanaten vernetzbare Oligourethane erhalten werden.

Gemäss einer weiteren ebenfalls weniger bevorzugten Ausführungsform der Herstellung der erfindungsgemässen Oligourethane kommen überschüssige Mengen an nicht blockierten Polyisocyanaten zum Einsatz, beispielsweise unter Einhaltung eines NCO/OH-Äquivalentverhältnisses von 1,2:1 bis 5:1, vorzugsweise 1,5:1 bis 3:1, so dass ebenfalls freie Isocyanatgruppen aufweisende Produkte entstehen, deren Isocyanatgruppen im Anschluss an die Herstellung der Umsetzungsprodukte mit Blockierungsmitteln der oben beispielhaft genannten Art blockiert werden.

Gemäss allen Ausführungsformen der Herstellung der erfindungsgemässen Oligourethane entstehen letztendlich Endprodukte, die

a) einen Gehalt an tert. Aminostickstoffatomen (berechnet als Stickstoff, Atomgewicht = 14) von 0,1 bis 3, vorzugsweise 0,3 bis 2 Gew.-%,

b) einen Gehalt an freien Isocyanatgruppen von 0 bis 15, vorzugsweise 0 bis 10 Gew.-% und

c) einen Gehalt an blockierten Isocyanatgruppen (berechnet als NCO, Molekulargewicht = 42) von 0 bis 15, vorzugsweise 0 bis 10 Gew.-% aufweisen.

Die unter a) genannten Stickstoffatome sind bei Verwendung von erfindungswesentlichen tert. Aminen mit nur einer Hydroxylgruppe endständig, bei Verwendung von entsprechenden, jedoch mehrwertigen Alkoholen innerhalb des Moleküls eingebaut. Der Begriff «Oligourethane» umfasst im Rahmen der vorliegenden Erfindung, den oben gemachten Ausführungen bezüglich des NCO/OH-Äquivalentverhältnisses und der Funktionalität der Ausgangsmaterialien entsprechend, sowohl Gemische niedermolekularer Oligourethane mit überschüssigen, gegebenenfalls teilblockierten Polyisocyanaten als auch höhermolekulare «Oligourethane», die besser als «Polyurethane» bezeichnet würden, und die dann erhalten werden, wenn mindestens difunktionelle Polyisocyanate mit mindestens difunktionellen tert. Aminen und gegebenenfalls mindestens difunktionellen Kettenverlängerungsmitteln unter Verwendung von nahezu äquivalenten Mengen der Ausgangsmaterialien umgesetzt werden. Wie jedoch bereits ausgeführt, ist dies weniger bevorzugt. Die unter a) bis c) gemachten Angaben beziehen sich jeweils auf die nach den beschriebenen Verfahren zur Herstellung der erfindungsgemässen Oligourethane hergestellten Produkte, die, wie gesagt, reine Oligourethane oder auch Gemische von reinen Oligourethanen mit überschüssigen Ausgangsmaterialien, insbesondere gegebenenfalls teilblockierten Isocyanaten oder schliesslich auch höhermolekulare «Oligourethane», d.h. Polyurethane darstellen können.

Besonders bevorzugte Oligourethane sind solche, die

a) einen Gehalt an tert. Aminstickstoffatomen von 0,3 bis 1,5 Gew.-%,

b) einen Gehalt an freien Isocyanatgruppen von 0 bis 8 Gew.-% und

c) einen Gehalt an blockierten Isocyanatgruppen von 0 bis 8 Gew.-% aufweisen,

mit der Massgabe, dass das Äquivalentverhältnis der freien und blockierten Isocyanatgruppen zu den tert. Aminogruppen bei 1:1 bis 1,5:1, vorzugsweise 1:1 bis 1,2:1 liegt.

Nicht selbstvernetzende erfindungsgemässe Oligourethane können mit organischen Polyisocyanaten mit freien und/oder blockierten Isocyanatgruppen zu bei Raumtemperatur lagerstabilen Gemischen abgemischt werden, die bei erhöhter Temperatur vernetzungsfähig sind. Hierzu geeignete Polyisocyanate sind die bereits oben beispielhaft genannten Verbindungen, wobei hier auch völlig blockierte Polyisocyanate eingesetzt werden können, die im übrigen vorzugsweise höher als difunktionelle Polyisocyanate darstellen (bezogen auf freie und blockierte Isocyanatgruppen).

Bei der Herstellung der hitzevernetzbaren Gemische aus erfindungsgemässen Oligourethanen, die im wesentlichen keine freien oder blockierten Isocyanatgruppen aufweisen und als Vernetzungsmittel dienenden Polyisocyanaten mit gegebenenfalls blockierten Isocyanatgruppen werden die Mengenverhältnisse der Einzelkomponenten vorzugsweise so bemessen, dass auf jedes tert. Aminstickstoffatom 1 bis 1,5, vorzugsweise 1 bis 1,2 freie und/oder blockierte Isocyanatgruppen des zugesetzten Polyisocyanats entfallen.

Selbstverständlich sind auch Übergänge zwischen den beiden Ausführungsformen denkbar, beispielsweise dergestalt, dass in den erfindungsgemässen Oligourethanen bereits freie oder blokkierte Isocyanatgruppen vorliegen, deren Menge jedoch für eine völlige Selbstvernetzung nicht ausreicht, so dass die zur Vernetzung erforderliche zusätzliche Menge an gegebenenfalls blokkierten Isocyanatgruppen in Form von zugesetzten Polyisocyanaten mit gegebenenfalls blockierten Isocyanatgruppen zur Verfügung gestellt wird.

Sowohl die selbstvernetzenden als auch die in Form der genannten Zweikomponenten-Systeme vernetzbaren Systeme können durch kurzzeitiges Erhitzen auf erhöhte Temperaturen wie z.B. 90 bis 160°C, vorzugsweise 110 bis 130°C in den vernetzten Zustand überführt werden.

Die erfindungsgemässen, hitzevernetzbaren Systeme stellen insbesondere wertvolle Bindemittel für die Herstellung von hitzevernetzbaren Lacken und Beschichtungsmitteln dar. Ihre Applikation erfolgt vorzugsweise aus einer Lösung in einem

geeigneten Lösungsmittel wie z. B. den bereits oben beispielhaft genannten oder deren Gemischen. Als Substrate kommen grundsätzlich alle in Frage, die den erhöhten, zur Vernetzung nötigen Temperaturen widerstehen können. Es sind dies z. B. Holz, Papier, Karton, Textil, Kunststoffe sowie Metalle.

Der Auftrag kann in grundsätzlich bekannter Weise durch Spritzen, Walzen, Rakeln, Tauchen, Drucken oder Streichen erfolgen in Trockenauftragsstärken von 5 – 1000 µm. Nach dem Auftragen wird eventuell vorhandenes Lösungsmittel durch Trocknen entfernt. Die resultierenden Filme sind dann in der Regel weich, teilweise sogar klebrig und gegen Lösungsmittelangriffe empfindlich. Nach der Vernetzung bei 90 – 160°C, vorzugsweise 110 – 130°C, sind die Lacküberzüge trocken und fest und lassen sich auch in polaren Lösungsmitteln teilweise nur leicht anquellen.

In den folgenden Beispielen beziehen sich alle Prozentangaben auf Gewichtsprozente.

Beispiel 1

165 Teile eines Polyethers aus Bisphenol A und Propylenoxid, OH-Zahl 200, 200 Teile eines Polypropylenglykols, OH-Zahl 112, und 90 Teile eines Polyethers aus Trimethylolpropan und Propylenoxid, OH-Zahl 370, werden im Vakuum bei 100°C entwässert und nach dem Abkühlen auf 70°C mit 209 Teilen eines Gemischs aus 80 Gew.-Teilen 2,4- und 20 Gew.-Teilen 2,6-Diisocyanatotoluol versetzt (NCO/OH-Äquivalentverhältnis = 1,5:1) und bei dieser Temperatur solange gerührt, bis der NCO-Gehalt auf 4,5% gefallen ist. In die Mischung werden dann 34 Teile ε-Caprolactam gegeben und das Rühren solange fortgesetzt, bis der NCO-Gehalt 3% beträgt. Dann wird das teilblockierte Isocyanatvorpolymer mit 300 Teilen Aceton verdünnt. In die Lösung werden jetzt 44 Teile eines Addukts aus 1 Mol Diethanolamin und 1 Mol Acrylamid eingetragen. Unter Rückfluss wird jetzt die Lösung solange gerührt, bis im IR-Spektrum nur noch geringe Mengen freier Isocyanatgruppen festzustellen sind. Die niedrigviskose Lösung besitzt einen Festkörpergehalt von 70%. Der gelöste Feststoff weist einen Gehalt an tert. Aminogruppen von 0,47%, einen Gehalt an freien Isocyanatgruppen von <0,1% und einen Gehalt an blockierten Isocyanatgruppen (berechnet als NCO) von 1,7% auf.

Auf ein unbehandeltes Stahlblech wird ein Nassfilm von etwa 100µm Stärke aufgebracht und eine Stunde bei Raumtemperatur getrocknet. Nach weiterem 10minütigem Trocknen bei 60°C erhält man einen weichen, klebrigen Überzug, der mit Aceton gut ablösbar ist.

Nach einstündigem Erhitzen auf 110°C ist der Film fest und trocken und in Aceton nicht anquellbar.

Beispiel 2

167 Teile eines Polyethers aus Bisphenol A und Propylenoxid, OH-Zahl 200, 168 Teile eines Polyesters aus Hexandiol und Adipinsäure, OH-Zahl 133, und 90 Teile eines Polyethers aus Trimethylolpropan und Propylenoxid, OH-Zahl 370, werden im Vakuum bei 100°C entwässert und nach dem Abkühlen auf 70°C mit 209 Teilen eines Gemisches aus 80 Gew.-Teilen 2,4- und 20 Gew.-Teilen 2,6-Diisocyanatotoluol versetzt (NCO/OH-Äquivalentverhältnis = 1,5:1) und bei dieser Temperatur solange gerührt, bis der NCO-Gehalt unter 5% gefallen ist. In diese Mischung werden dann 34 Teile ε-Caprolactam gegeben und das Rühren solange fortgesetzt, bis der NCO-Gehalt etwa 3% beträgt. Dann wird das Isocyanatvorpolymer mit 289 Teilen Aceton verdünnt. In diese Lösung werden jetzt 44 Teile des in Beispiel 1 beschriebenen «Michael»-Addukts eingetragen. Unter Rückfluss wird die Lösung solange gerührt, bis IR-spektroskopisch nur noch geringe Mengen freier Isocyanatgruppen festzustellen sind. Die niedrigviskose Lösung besitzt einen Festkörpergehalt von 70°C. Der gelöste Festkörper weist einen Gehalt an tert. Stickstoffatomen von 0,49%, an freien Isocyanatgruppen von 0,1% und an blockierten Isocyanatgruppen von 1,77% auf.

Es wird ein Film, wie in Beispiel 1 beschrieben, erzeugt und getrocknet. Nach 30minütigem Erhitzen auf 130°C erhält man einen trockenen, glänzenden Film, der gegen Aceton resistent ist.

Beispiel 3

Es wird ein Isocyanatvorpolymer wie in Beispiel 1 zubereitet. In dieses werden bei 70°C 45 Teile ε-Caprolactam eingetragen und die Mischung solange gerührt, bis der NCO-Gehalt etwa 2,9% beträgt. Nach dem Auflösen in 312 Teilen Aceton werden 58 Teile eines Addukts aus 1 Mol N-Methylethanolamin und 1 Mol Acrylamid zugesetzt. Die Lösung wird solange unter Rückfluss gerührt, bis sich IR-spektroskopisch nur noch Spuren freier Isocyanatgruppen feststellen lassen. Der gelöste Festkörper weist einen Gehalt an tert. Stickstoffatomen von 0,73%, an freien Isocyanatgruppen von <0,1% von an blockierten Isocyanatgruppen von 2,2% auf.

Wie in Beispiel 1 beschrieben, wird aus der 70%igen Lösung ein Film hergestellt, der nach dem Trocknen in Aceton löslich und klebrig ist. Nach 1stündigem Erhitzen auf 100°C erhält man einen weichen aber klebfreien Film, der in Aceton nicht anquillt.

Beispiel 4

Das Isocyanatvorpolymer aus Beispiel 1 wird bei 75°C mit 45 Teilen ε-Caprolactam umgesetzt, bis der NCO-Gehalt unter 3% gefallen ist. Nach dem Auflösen in 312 Teilen Aceton werden 51 Teile eines Addukts aus 1 Mol N-Methylethanolamin und 1 Mol Acrylnitril zugegeben und die Mischung unter Rückfluss bis zum fast völligen Verschwinden der Isocyanatbande im IR-Spektrum gerührt. Die so erhaltene Lösung hat einen Festkörpergehalt von 70%. Der gelöste Festkörper weist einen Gehalt an tert. Stickstoffatomen von 0,74%, an freien Isocyanatgruppen von <0,1% und an blockierten Isocyanatgruppen von 2,2% auf.

Wie in Beispiel 1 beschrieben, wird aus der Lösung ein Film erzeugt, der klebrig und in Aceton löslich ist. Nach 20minütigem Erhitzen auf 130°C ist der Film weich aber trocken und quillt in Aceton nur schwach an.

Beispiel 5

Das Isocyanatvorpolymer aus Beispiel 1 wird bei 75°C mit 34 Teilen ε-Caprolactam umgesetzt, bis der NCO-Gehalt unter 3% gefallen ist. Nach dem Auflösen in 300 Teilen Xylol werden 40 Teile eines Addukts aus 1 Mol Diethanolamin und 1 Mol Acrylnitril zugegeben und die Lösung bei 70°C solange gerührt, bis IR-spektroskopisch nur noch Spuren freier Isocyanatgruppen festzustellen sind. Man erhält eine 70%ige, niedrigviskose, leicht trübe Lösung. Der gelöste Festkörper weist einen Gehalt an tert. Stickstoffatomen von 0,47%, an freien Isocyanatgruppen von 0,1% und an blockierten Isocyanatgruppen von 1,7% auf.

Wie in Beispiel 1 beschrieben, wird aus der Lösung ein Film erzeugt, der klebrig und in Aceton löslich ist. Nach 30-minütigem Erhitzen auf 110°C ist er fest, trocken und klebfrei und in Aceton nicht löslich.

Beispiel 6

Das Isocyanatvorpolymer aus Beispiel 1 wird bei 70°C mit 34 Teilen ε-Caprolactam umgesetzt, bis der NCO-Gehalt etwa 2,9% beträgt. Nach dem Auflösen in 298 Teilen Aceton werden 47 Teile eines Addukts aus 1 Mol Bis(2-hydroxypropyl)-amin und 1 Mol Acrylnitril zugegeben und die Mischung unter Rückfluss bis zum fast völligen Verschwinden der Isocyanatbande im IR-Spektrum gerührt. Die so entstandene Lösung hat einen Festkörpergehalt von 70%. Der gelöste Festkörper weist einen Gehalt an tert. Stickstoffatomen von 0,47%, an freien Isocyanatgruppen von <0,1% und an blockierten Isocyanatgruppen von 1,7% auf.

Der nach der Methode aus Beispiel 1 erhaltene klebrige Film ist nach 45minütigem Erhitzen 100°C klebfrei und in Aceton unlöslich.

**Patentansprüche**

1. Bei Raumtemperatur lagerstabile, bei erhöhter Temperatur selbstvernetzende oder mit organischen Polyisocyanaten mit gegebenenfalls zumindest teilweise blockierten Isocyanatgruppen vernetzbare Oligourethane, gekennzeichnet durch

a) einen Gehalt an tertiären Aminstickstoffatomen in Form von über Urethangruppen endständig und/oder innerhalb des Moleküls eingebauten Struktureinheiten der Formel

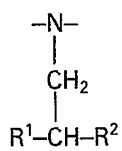

von 0,1 bis 3 Gew.-%, wobei

$R^1$ für Wasserstoff oder einen Alkylrest mit 1 bis 4 Kohlenstoffatomen steht,

$R^2$ für -C≡N, $-CO-NH_2$, $-CO-NHR^3$, $-CO-NR^3_2$ oder $-COOR^3$ steht, wobei

$R^3$ einen, gegebenenfalls inerte Substituenten aufweisenden, einwertigen Kohlenwasserstoffrest bedeutet,

b) einen Gehalt an freien Isocyanatgruppen von 0 bis 15 Gew.-%, und

c) einen Gehalt an blockierten Isocyanatgruppen (berechnet als NCO) von 0 bis 15 Gew.-%.

2. Oligourethane gemäss Anspruch 1, gekennzeichnet durch

a) einen Gehalt an tert. Aminstickstoffatomen in Form von über Urethangruppen end- und/oder seitenständig eingebauten Struktureinheiten der in Anspruch 1 genannten Formel 0,3 bis 1,5 Gew.-%, wobei

$R^1$ für Wasserstoff oder eine Methylgruppe steht,

$R^2$ für -C≡N, $-CO-NH_2$, $-CO-NHR^3$, $-CO-NR^3_2$ oder $-COOR^3$ steht, wobei

$R^3$ für einen Alkylrest mit 1 – 4 Kohlenstoffatomen steht,

b) einen Gehalt an freien Isocyanatgruppen von 0 bis 8 Gew.-% und

c) einen Gehalt an blockierten Isocyanatgruppen (berechnet als NCO) von 0 bis 8 Gew.-%, mit der Massgabe, dass der Gesamtgehalt an freien Isocyanatgruppen b) und blockierten Isocyanatgruppen c) und der Gehalt an tert. Aminstickstoffatomen a) einem Äquivalentverhältnis (b + c):a von 1:1 bis 1,5:1 entspricht.

3. Verfahren zur Herstellung von Oligourethanen gemäss Anspruch 1, dadurch gekennzeichnet, dass man ein, gegebenenfalls Urethangruppen aufweisendes organisches Polyisocyanat, dessen Isocyanatgruppen gegebenenfalls teilweise in blockierter Form vorliegen, mit Verbindungen der Formel

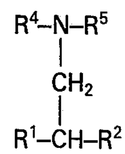

in welcher

$R^1$ und $R^2$ die in Anspruch 1 genannte Bedeutung haben und

$R^4$ und $R^5$ für gleiche oder verschiedene Reste stehen und Kohlenwasserstoffreste mit 1 – 20 Kohlenstoffatomen oder, mindestens eine alkoholische Hydroxylgruppe als Substituenten aufweisende Kohlenwasserstoffreste mit 2 bis 20 Kohlenstoffatomen bedeuten, mit der Massgabe, dass mindestens einer der Reste $R^4$ oder $R^5$ mindestens eine alkoholische Hydroxylgruppe aufweist, unter Einhaltung eines Äquivalentverhältnisses von freien Isocyanatgruppen zu Hydroxylgruppen von 0,7:1 bis 2,5:1 unter Urethanbildung zur Reaktion bringt, wobei im übrigen die Art und Mengenverhältnisse der genannten Ausgangsmaterialien so gewählt werden, dass die resultierenden Oligourethane

a) einen Gehalt an tert. Aminstickstoffatomen in Form von Struktureinheiten der in Anspruch 1 genannten Formel von 0,1 bis 3 Gew.-%,

b) einen Gehalt an freien Isocyanatgruppen von 0 bis 15 Gew.-% und
c) einen Gehalt an blockierten Isocyanatgruppen (berechnet als NCO) von 0 bis 15 Gew.-% aufweisen.

4. Verwendung der Oligourethane gemäss Anspruch 1, gegebenenfalls in Abmischung mit organischen Polyisocyanaten mit gegebenenfalls blockierten Isocyanatgruppen, als Bindemittel für hitzevernetzbare Beschichtungsmittel.

**Claims**

1. Oligourethanes which are stable in storage at room temperature and which crosslink spontaneously at elevated temperature or can be crosslinked with organic polyisocyanates containing optionally at least partly blocked isocyanate groups, characterized by
a) a content of tertiary amine nitrogen atoms in the form of structural units incorporated terminally and/or within the molecule via urethane groups and corresponding to the following formula

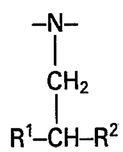

of from 0.1 to 3% by weight,
$R^1$ being hydrogen or a $C_1$-$C_4$ alkyl radical,
$R^2$ being -C≡N, $-CO-NH_2$, $-CO-NHR^3$, $-CO-NR^3_2$ or $-COOR^3$ where
$R^3$ is a monofunctional hydrocarbon radical optionally bearing inert substituents,
b) a content of free isocyanate groups of from 0 to 15% by weight and
c) a content of blocked isocyanate groups (expressed as NCO) of from 0 to 15% by weight.

2. Oligourethanes as claimed in claim 1, characterized by
a) a content of tertiary amine nitrogen atoms in the form of structural units having the formula shown in claim 1 incorporated terminally and/or laterally via urethane groups of from 0.3 to 1.5% by weight,
$R^1$ being hydrogen or a methyl group,
$R^2$ being -C≡N, $-CO-NH_2$, $-CO-NHR^3$, $-CO-NR^3_2$ or $-COOR^3$ where
$R^3$ is a $C_1-C_4$ alkyl radical,
b) a content of free isocyanate groups of from 0 to 8% by weight and
c) a content of blocked isocyanate groups (expressed as NCO) of from 0 to 8% by weight, with the proviso that the total content of free isocyanate groups b) and blocked isocyanate groups c) and the content of tert. amine nitrogen atoms a) corresponds to an equivalent ratio (b+c):a of from 1:1 to 1.5:1.

3. A process for the production of the oligourethanes claimed in claim 1 characterized in that an organic polyisocyanate optionally containing urethane groups, of which the isocyanate groups are present optionally partly in blocked form, is reacted with compounds corresponding to the following formula

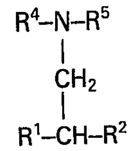

in which
$R^1$ and $R^2$ are as defined in claim 1 and
$R^4$ and $R^5$ are the same or different and represent $C_1-C_{20}$ hydrocarbon radicals or $C_1-C_{20}$ hydrocarbon radicals containing at least one alcoholic hydroxyl group as substituent, with the proviso that at least one of the radicals $R^4$ or $R^5$ contains at least one alcoholic hydroxyl group, maintaining an equivalent ratio of free isocyanate groups to hydroxyl groups of 0.7:1 to 2.5:1, with urethane formation, the starting materials mentioned being selected in regard to type and quantity in such a way that the resulting oligourethanes
a) have a content of tert. amine nitrogen atoms in the form of structural units of the formula shown in claim 1 of from 0.1 to 3% by weight,
b) a content of free isocyanate groups of from 0 to 15% by weight and
c) a content of blocked isocyanate groups (expressed as NCO) of from 0 to 15% by weight.

4. The use of the oligourethanes claimed in claim 1, optionally in admixture with organic polyisocyanates containing optionally blocked isocyanate groups, as binders for heat-crosslinkable coating compositions.

**Revendications**

1. Oligo-uréthannes stables au magasinage à température ambiante, auto-réticulables à température élevée ou réticulable à l'aide de polyisocyanates organiques comportant des groupes isocyanates éventuellement ou moins partiellement bloqués, ces oligo-uréthannes étant caractérisés par
a) une teneur de 0,1 à 3% en poids en des atomes d'azote de fonction amino tertiaire sous forme de motifs structurels, incorporés par l'intermédiaire de groupes uréthannes en bout de molécule et/ou à l'intérieur de la molécule, et répondant à la formule

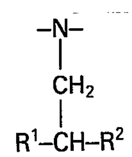

dans laquelle
$R^1$ représente un atome d'hydrogène ou un reste alkyle ayant 1 à 4 atomes de carbone,
$R^2$ représente -C≡N, $-CO-NH_2$, $-CO-NHR^3$, $-CO-NR^3_2$ ou $-COOR^3$, et
$R^3$ représente un reste d'hydrocarbure monovalent présentant éventuellement des substituants inertes,
b) une teneur de 0 à 15% en poids en des groupes isocyanates libres, et

2. Oligo-uréthannes selon la revendication 1, caractérisés par

c) une teneur de 0 à 15% en poids en des groupes isocyanates bloqués (calculés en NCO).

a) une teneur de 0,3 à 1,5% en poids en des atomes d'azote de fonction amine tertiaire, sous forme de motifs structurels incorporés, par l'intermédiaire de groupes uréthannes, en extrémité et/ou en position latérale, ces motifs répondant à la formule citée à l'exemple 1, dans laquelle

$R^1$ représente un atome d'hydrogène ou un groupe méthyle,

$R^2$ représente $-C{\equiv}N$, $-CO-NH_2$, $-CO-NHR^3$, $-CO-NR^3_2$ ou $-COOR^3$, et

$R^3$ représente un reste alkyle ayant 1 à 4 atomes de carbone,

b) une teneur de 0 à 8% en poids en des groupes isocyanates libres, et

c) une teneur de 0 à 8% en poids en des groupes isocyanates bloqués (calculés en NCO), à la condition que la teneur totale en des groupes isocyanates libres b) et en des groupes isocyanates bloqués c) et la teneur en des atomes d'azote de fonction amino tertiaire a) correspondent à un rapport entre les équivalents de (b + c):a compris entre 1:1 et 1,5:1.

3. Procédé pour préparer des oligo-uréthannes selon la revendication 1, caractérisé en ce qu'on fait réagir un polyisocyanate organique, présentant éventuellement des groupes uréthannes, dont les groupes isocyanates sont éventuellement partiellement présents sous forme bloquée, avec des composés de formule

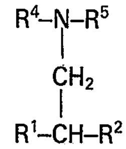

dans laquelle

$R^1$ et $R^2$ ont le sens indiqué à la revendication 1, et $R^4$ et $R^5$ représentent des restes identiques ou différents et sont des restes d'hydrocarbures comportant 1 à 20 atomes de carbone ou des restes d'hydrocarbures comportant 2 à 20 atomes de carbone et présentant comme substituants au moins un groupe hydoxyle alcoolique, à la condition qu'au moins l'un des restes $R^4$ et $R^5$ présente au moins un groupe hydroxyle alcoolique, en maintenant, entre les équivalents des groupes isocyanates libres et ceux des groupes hydroxyles, un rapport compris entre 0,7:1 et 2,5:1, avec formation d'uréthannes, la nature et les rapports entre les quantités des matières de départ citées étant par ailleurs choisis de façon que les oligo-uréthannes résultants présentent

a) une teneur de 0,1 à 3% en poids en des atomes d'azote de fonction amino tertiaire, sous forme de motifs structurels répondant à la formule indiquée à la revendication 1,

b) une teneur de 0 à 15% en poids en des groupes isocyanates libres, et

c) une teneur de 0 à 15% en poids en des groupes isocyanates bloqués (calculés en NCO).

4. Utilisation des oligo-uréthannes selon la revendication 1, éventuellement en mélange avec des polyisocyanates organiques comportant éventuellement des groupes isocyanates bloqués, comme liants pour des produits thermoréticulables d'enduction et de revêtement.